# EUROPEAN PATENT SPECIFICATION

(11) **EP 3 730 273 B1**
(45) Date of publication and mention of the grant of the patent: **15.01.2025**
(21) Application number: 19170938.5
(22) Date of filing: 24.04.2019
(51) Int. Cl.: B29C 45/14, B29C 45/16, B29C 33/12, B29K 105/20

(54) **INJECTION MOLD FOR OVERMOLDING INSERTS IN A WORKPIECE AND INJECTION-MOLDED WORKPIECE HAVING AN INSERT**
SPRITZGUSSFORM ZUM UMSPRITZEN VON EINSÄTZEN IN EINEM WERKSTÜCK UND SPRITZGEGOSSENES WERKSTÜCK MIT EINEM EINSATZ
MOULE D'INJECTION POUR INSERTS DE SURMOULAGE DANS UNE PIÈCE À USINER ET PIÈCE À USINER MOULÉE PAR INJECTION DOTÉE D'UN INSERT

(43) Date of publication of application: 28.10.2020
(73) Proprietor: TE Connectivity Germany GmbH, 64625 Bensheim (DE)
(72) Inventor: SCHULZ, Alexander, 67459 Böhl-Iggelheim (DE); SHASHIDHARA, Nairy, 67141 Neuhofen (DE)
(74) Representative: Grünecker Patent- und Rechtsanwälte PartG mbB

(56) References cited:
- EP-A1- 1 870 684
- CH-A- 426 217
- DE-A1- 102013 114 136
- DE-U1- 8 621 129
- JP-B2- 5 469 400
- JP-B2- 6 287 420
- KR-A- 20040 096 696
- US-A- 4 793 607
- US-A- 5 527 502
- US-A1- 2012 279 320
- US-A1- 2015 336 304
- US-A1- 2016 356 627

## Description

The invention relates to a method of producing a workpiece by injection molding in an injection mold. The application further describes an injection mold for the claimed method. The invention finally relates to an injection-molded workpiece.

Injection molds and injection-molded workpieces are known in the art. Usually, a thermoplastic material is used as a first material which is injected into a mold in order to form a workpiece. It is sometimes necessary to provide a workpiece made from a first material with an insert that is made from a second material which differs from the first material. An insert may, for example, be a magnet or a bushing. Usually, the insert is placed in the injection mold, whereby the position of the insert is secured by holding members. The holding members are provided with contact surfaces that abut the insert and thereby fixate it in the mold. The mold is then filled with the first material, thereby overmolding the insert at least in parts.

Injections molds for overmolding inserts, the molds having holding members with round or trapezoidal cross-sections, are known from US 2015/336304 A1, CH 426 217 A, US 5 527 502 A, DE 8621 129 U1, JP 6 287420 B2 and DE 10 2013 114136 A1.

An injection mold is often intended to produce large quantities of workpieces one after the other. The holding members in the injection mold must therefore be adapted to securely fixate an insert even if the size of different inserts varies from insert to insert. In other words, the tolerances for the inserts have to be taken into account. It is therefore a typical solution to adapt the holding members to be able to secure the largest insert which is still in accordance with the tolerances for the insert. In the case that an insert is used which is in accordance with the tolerances, but smaller than the largest possible insert, the insert may not abut all holding members in the injection mold. In other words, a gap may be formed at least in parts between one or more holding members and the insert. When the mold is then filled with the first material, said material will at least partially flow into gaps between the holding members and the insert. This material will form burrs or flashes of material which may cover the insert at least in part.

Afterwards, when the workpiece is used in harsh environments and exposed to stresses, for example vibrations, a burr may become detached from the remaining workpiece. Such a situation may be critical, for example in cases where the workpiece is used inside a gear box or in another device with moving parts. The burr may get stuck between moving parts and damage the device. Furthermore, when loose burrs get inside valves or filters, said valves or filters may become clogged.

It is an object of the invention to provide an injection mold, an injection-molded workpiece and a method as described above, which reduce or even eliminate the risk of burrs detaching from a workpiece.

For the method as mentioned in the beginning, the object is achieved by a method defined in claim 1. For the injection-molded workpiece as mentioned above, the object is achieved by a workpiece as defined in claim 9. Preferred embodiments of the method and the injection-molded workpiece are defined in the dependent claims

The invention solves the aforementioned object in that a burr may still be formed. However, said burr will strongly adhere to the remaining workpiece. Thereby, the risk of the burr becoming detached is reduced or even eliminated. Due to the convex cross section of the contact surface of the holding projection, it may always be possible for the first material to flow in a region between the holding projection and the insert. The contact surface of at least one holding projection does not abut the insert and a continuous material film is created which is strongly connected to the remaining workpiece. In a case where the insert fully abuts the contact surface or in parts, the first material will flow into the region between the contact surface and the insert until a further flow is blocked by the insert. Thereby, the material will follow the convex shape of the contact surface, wherein it is ensured that a thickness of the material increases from a contact point of the holding member with the insert towards a direction away from the insert. Thereby, this burr may be securely connected to the remaining workpiece.

The contact surface is not defined as only the area of an exact contact point which may be in direct contact with an insert, but also as the surface in a vicinity of said contact point. For example a surface that is arranged within a radius around said contact point, said radius being about 10% to 100% of a thickness of the first material in the vicinity of a recess formed by the holding member.

To summarize, a workpiece according to the invention may still be provided with a burr. However, this burr is securely attached to the remaining workpiece such that the risk of detaching the burr during operation may be decreased.

In the following, further improvements of the invention are described. The additional improvements may be combined independently of each other, depending on whether a particular advantage of a particular improvement is needed in a specific application.

According to a first advantageous embodiment, the at least one contact surface may have an overall convex cross section in at least one or more intersecting planes. As a consequence, the holding projection may have an overall pin shape. This may lead to a securely fixated burr. A holding projection having an overall pin shape preferably has a rotational symmetry along an axis of rotation that is coaxial with the direction of projection of the holding projection.

In order to facilitate the flow of the first material between the holding projection and the insert, the at least one holding projection may taper from the base towards the at least one contact surface. This may also facilitate the removal of the workpiece after injection molding.

The at least one holding projection preferably has an overall wedge-shaped cross section. In other words, at least two opposing sides or flanks of the holding projection may taper towards the at least one contact surface. The convex contact surface may form a top of the wedge.

According to a preferred form of the holding projection, the holding projection may have at least one flank that is in inclined with respect to a surface normal on the contact surface at an angle between 15° and 60°, more preferably between 25° and 50°. The surface normal on the contact surface is preferably parallel with or identical to a longitudinal axis of the holding projection along which the holding projection projects from the base.

In order to securely fixate an insert during injection molding, the at least one holding projection and/or the complete at least one holding member is preferably formed as a rib, wherein the top of the rib has the convex cross section. The cross section may thereby be a cut perpendicular to a longitudinal direction of the rib. Said longitudinal direction of the rib is preferably perpendicular to a direction of projection along which the holding projection projects.

The overall shape and the proportions of the holding projection may influence the flow of the first material. According to a particularly advantageous shape, the at least one holding projection may have, in a cross section, a length and a width wherein the width at the half length is between 70% and 130% of the length. The cross section is thereby a cross section that cuts through the contact surface, in particular a cross section that extends parallel with the direction of projection along which the holding projection projects. The length may be measured between the base of the holding member and the contact surface, in particular, along the direction along which the holding projection projects. The width is preferably measured perpendicular to said length.

In order to form a convex shape that allows the first material to flow between the holding member and the insert, the at least one contact surface preferably has a radius of curvature that lies in a range between 10% and 100% of the material thickness of the first material in the vicinity of the recess formed by the holding member. Said material thickness generally corresponds to the length of the holding projection and/or the depth of the recess. More preferably, the radius of curvature lies in a range between 30% and 70% of the material thickness.

The radius of curvature may, in the alternative, be related to a width of the holding projection. In particular, the radius of curvature is preferably between 20° and 60°, more preferably between 25° and 50°, of the width of the holding projection. Said width is thereby preferably a width which is measured at the half maximum of a length of the holding projection.

The holding member comprising the at least one holding projection may be interchangeable such that different holding members may be used with the injection mold. The injection mold is provided with a plurality of holding members.

The injection-molded workpiece may further be improved in that a material film consisting of the first material covers a bottom of the recess at least in parts, wherein the material film is connected to at least one flank of the recess. The at least one flank of the recess may in particular be a side wall. At least one material film is connected with both flanks of the recess. The bottom of the recess is preferably the region where the concave shape is located or, in other words, in the vicinity of the insert.

The at least one recess preferably tapers towards the insert.

A material thickness of the first material preferably decreases, in particular continuously, from at least one flank of the recess towards a bottom of the recess. In other words, the material thickness increases from the bottom towards the flanks. Thereby, a burr formed at the bottom of the recess may be securely fixated to the remaining material.

The at least one insert is preferably made from metal. More preferably, the at least one insert is a magnet or a bushing. An insert may also be covered with or embedded in a plastic material. Just by way of example, a plastic bonded magnet may also be used as an insert.

The at least one injection-molded workpiece is preferably a workpiece that is adapted for being used inside a gear box. Additionally or alternatively, the at least one workpiece may be adapted for being submerged in oil or other substances. In both cases, the workpiece may benefit from the advantages of the invention. In particular in gear boxes, loose burrs may provide a risk for damaging the device when they get into moving parts. Furthermore, when loose burrs get inside valves or filters, said valves or filters may become clogged.

Preferably, the workpiece is produced by an injection mold as described herein, into which at least one insert made from the second material is inserted and which is at least partially filled with the first material. Consequently, the at least one workpiece according to the invention is preferably, at least in parts, formed complimentary to the injection mold as described herein.

In the following, the invention and its improvements are described in greater details using an exemplary embodiment and with reference to the drawings. As described above, the various features shown in the embodiment may be used independently of each other in specific applications.

In the following figures, elements having the same function and/or the same structure will be referenced by the same reference signs.

In the drawings:
- Fig. 1: shows a schematic cross-sectional view of an injection mold as described herein and an injection molded workpiece according to the invention;
- Fig. 2: shows a perspective view of the workpiece shown in Fig. 1; and
- Figs. 3 to 7: show further examples of the injection mold as described herein and embodiments of the corresponding injection molded workpiece.

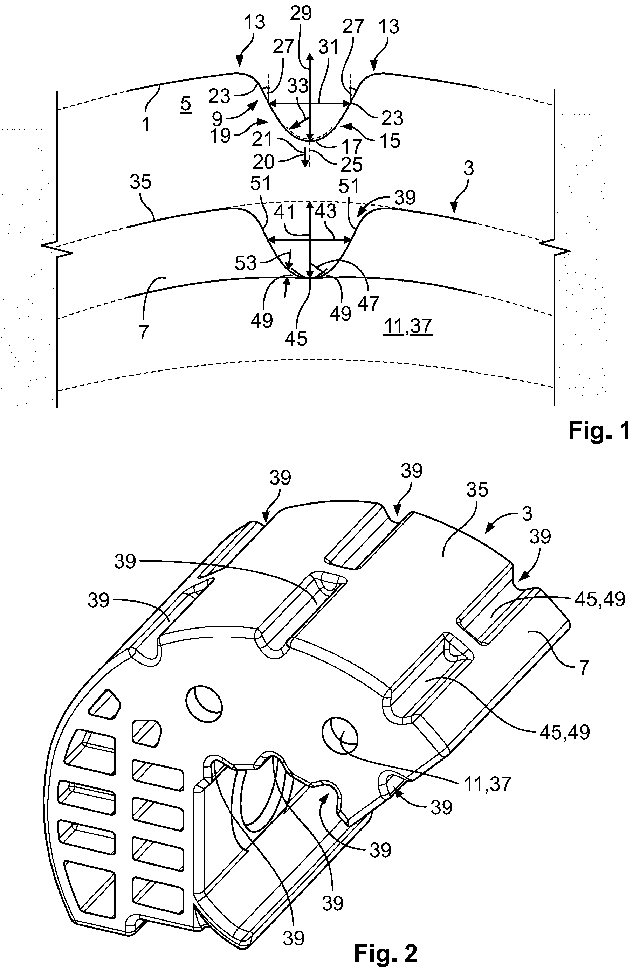

Fig. 1 shows an injection mold 1 according to an example. The injection mold 1 is shown above an injection molded workpiece 3. Fig .1 may depict a situation in which the workpiece 3 is removed from the mold 1, after the injection molding process is finished.

For a better understanding, the workpiece 3 is also shown in a perspective view in Fig. 2.

The injection mold 1 is at least partially formed complementary to the workpiece 3. The injection mold 1 is provided with a cavity 5 into which a first material 7 may be injected. The first material 7 is preferably a thermoplastic material.

The injection mold 1 is provided with a holding member 9 for securing an insert 11 using overmolding said insert 11. The holding member 9 has a base 13 from which a holding projection 15 projects into the cavity 5. The holding projection 15 is provided with a contact surface 17 for fixating the insert 11. In other words, the contact surface 17 may abut the insert 11 at least in parts. Generally, the mold 1 is provided with a plurality of holding members 9, wherein at least one of the holding members 9 abuts the insert 11 with its contact surface 17 during overmolding of the insert 11.

The contact surface 17 has an overall convex cross section 19. Said convex cross section 19 is seen along an intersecting plane which extends parallel with a contact direction 21 along which the holding member 9 and the insert 11 are brought into contact with each other. It should be noted that the holding projection 15 preferably projects along a direction of projection 20 which may be coaxial with said contact direction 21. The contact direction 21 may therefore be seen as a projection direction or longitudinal direction of the holding projection 15. To summarize, the holding projection 15 has a rounded shape at least in an area in which it abuts the insert 11 during overmolding. The intersecting plane is identical with the drawing plane of Fig. 1.

The contact surface 17 may have an overall convex cross section 19 in at least one more intersecting plane (not shown here). Such a shape may result in an overall pin shaped holding projection 15. The aforementioned one more intersecting plane is preferably arranged perpendicular to the first intersecting plane mentioned above.

The at least one holding projection 15 preferably tapers from the base 13 towards the contact surface 17. Since both sides or flanks 23 of the holding projection 15 are inclined with respect to a surface normal 25 of the contact surface 17, the holding projection has an overall wedge shape. The surface normal 25 is parallel with the contact direction 21. Preferably, the surface normal 25 is coaxial with the contact direction 21. The arrow showing the contact direction 21 in Fig. 1 and the dashed line showing the surface normal 25 are drawn separated from each other for the sake of visibility.

Both flanks 23 are preferably inclined with respect to the surface normal 25 at an angle 27, which is preferably between 15° and 60°, more preferably between 25° and 50°.

The holding projection 15 has a length 29 that is measured along the direction of projection 20. The length 29 extends between a height of the base 13 and the contact surface 17. A width 31 of the holding projection is preferably measured at half of the length 29 perpendicular to the contact direction 21 in the intersecting plane. The width 31 is preferably between 50% and 150% of the length 29, more preferably between 80% and 120%.

The contact surface 17 has, as mentioned above, an overall convex shape that results in the convex cross section 19. The convex shape may be described by a radius of curvature 33 which is indicated by a dashed half circle in Fig. 1. The radius 33 is preferably between 20% and 60%, more preferably between 25% and 50% of the width 31.

Perpendicular to the intersecting plane, the holding member 9 preferably has an overall shape of a rib. In other words, the convex shape of the contact surface 17 extends in a direction perpendicular to the widths 31 and length 29. In the alternative, the holding member 9 may have a rotational symmetry around an axis of symmetry that is coaxial with the direction of projection 20. In this case, the holding member 9 may have an overall pin-shape.

In the following, the workpiece 3 that can be produced with the injection mold 1 is described with respect to Figs. 1 and 2.

The first material 7 has an outer surface 35 which is in contact with the injection mold 1 during the molding process. The shape of the surface 35 is defined by the shape of the injection mold 1. The first material 7 at least partially covers the insert 11. The insert 11 is preferably made from a second material 37 that differs from the first material 7. Preferably, the second material 37 is a metal. The insert 11 may, just by way of example, be a magnet or a bushing.

During the molding process, the first material 7 flows between the injection mold 1 and the insert 11. As a consequence of the injection mold 1 being provided with the at least one holding member 9, the holding member 9 creates a recess 39 in the first material 7 of the workpiece 3. The recess 39 is basically formed complementary to the holding member 9. In other words, a depth 41 of the recess 39 is basically identical to the length 29 of the holding projection 15 and a width 43 of the recess 39 is basically identical to the width 31 of the holding projection 15. The length 29 and the depth 41 are preferably basically identical with a material thickness 55 of the first material 7 in the vicinity of the recess, whereby deviations of about 5% may be possible.

In the vicinity of the insert 11, or, in other words, at the bottom 45 of the recess 39, the recess 39 has an overall concave shape. This concave shape is formed complementary to the convex shape of the holding member 15. Consequently, a radius 47 of the curved shape is basically identical to the radius 33 of the convex shape of the holding member 15.

Due to the convex shape of the contact surface 17, the first material 7 may easily flow between the holding projection 15 and the insert 11 during the molding process.

The recess 39 tapers towards the insert 11 as a result of the wedge shape of the holding projection 15.

In the region where the contact surface 17 is not in abutment with the insert 11, a material film 49 may be formed between the contact surface 17 and the insert 11. This material film 49 may cover the bottom 45 of the recess 39. The material film 49 is connected with at least one of the sides or flanks 51 of the recess 39. In a region where a gap exists between the contact surface 17 and the insert 11, the material film 49 is connected with both opposed flanks 51, forming a continuous material film at the bottom 45 of the recess 39.

The material film 49 is, due to the curved shape of the material 7 that borders the recess 39, securely fixated with the workpiece 3. A material thickness 53 of the material film 49 increases from the bottom 45 towards the flanks 51.

The risk of the material film 49 getting detached is thereby decreased. In other words, the material film 49 may form a burr or a flash. However, this burr may remain on the workpiece 3. Expensive removal of the material film 49 can be omitted. The workpiece 3 may be used in harsh conditions in which burrs that are not formed like the material film 49 according to the invention getting detached from the workpiece and risk a failure of a device in which the workpiece is used.

As already mentioned above, the injection mold 1 is preferably provided with a plurality of holding members 9 that have overall rib-shapes. These rib-shaped holding members 9 produce groove shaped recesses in the workpiece as it is depicted in Fig. 2.

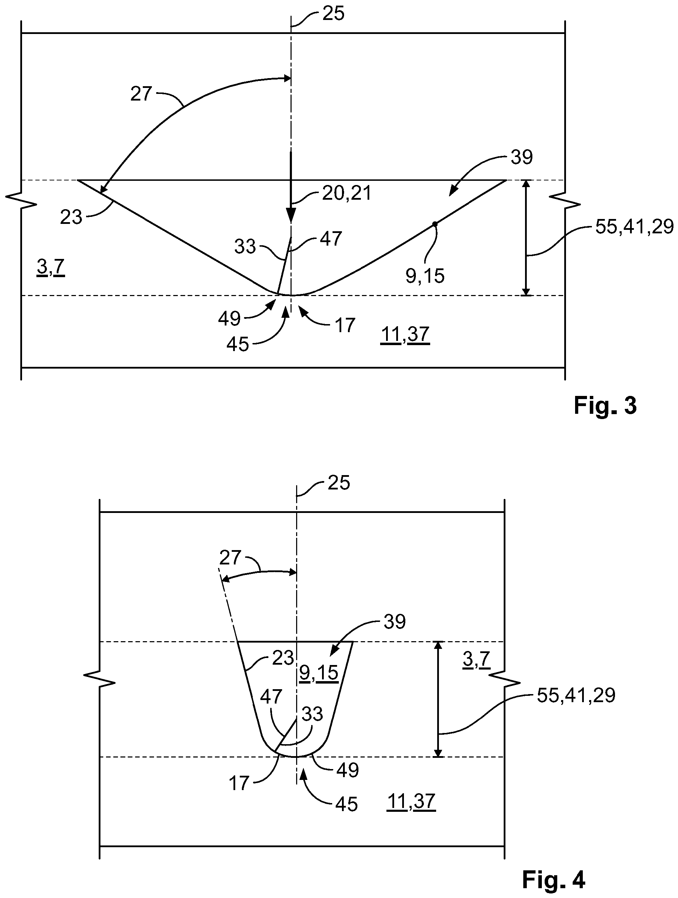

In the following, further advantageous shapes for a holding member 9 and a holding projection 15 are briefly described with respect to Figs.3 to 7, wherein each Figure shows a holding member being in contact with an insert.

For the sake of brevity, only the differences in contrast to the embodiment described with respect to Fig. 1 are described in detail. It should be noted that each of the following figures shows a cross-section through the holding member 9. The overall shape of the cross section may either be an overall rib-like shape, wherein the cross section shows a cut perpendicular to a longitudinal direction of a rib.

In the alternative, the holding members 9 may have overall pin-shapes, wherein the holding members 9 are basically provided with a rotational symmetry around a rotational axis that is coaxial with the direction of projection 20.

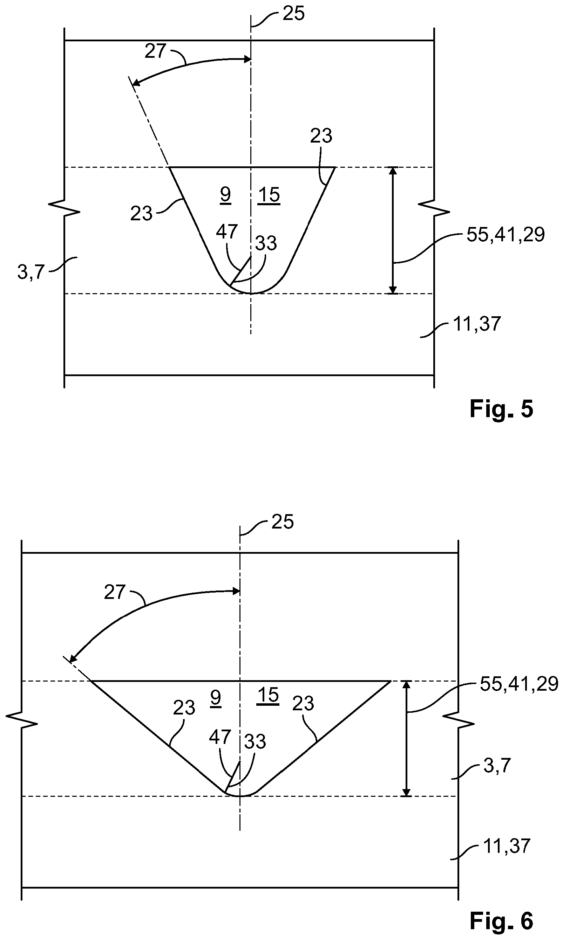

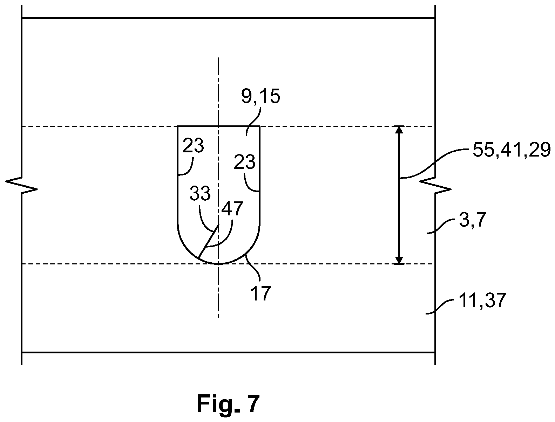

In the following figures, Figs. 3 and 4 relate to extreme angles of the flanks 23 which can still be used in order to take advantage from the holding member 9 according to the invention. In Figs.5 and 6, the upper and lower limit for the angle 27 of the flanks 23 according to a preferred range of said angle 27 are shown. Finally, Fig. 7 relates to a holding member 9 with parallel flanks 23 and a convex contact surface 17.

In Fig. 3, a holding member 9 and a holding projection 15 are shown wherein the angle 27 between the flanks 23 and the surface normal 25 is about 60°. The radius 33 of the curvature of the contact surface 17 is about 50% of a thickness 55 of the first material 7 adjacent to the recess 39. The thickness 55 of the first material 7 is generally equal to the depth 41 of the recess 39 and/or to the length 29 of the holding projection 15. As mentioned before, these dimensions relate to an example for a holding projection 15 having a large angle 27. Even with this large angle 27, the workpiece 3 may still benefit from the advantage of the invention. In other words, a material film 49 will form at the bottom 45 of the recess 39.

In Fig. 4, an angle 27 for inclined flanks 23 that is small compared to the angle 27 of the embodiment described with respect to Fig. 3, is shown. This angle 27 is about 15°. The radius of curvature 33 of the contact surface 17 is about 30% of the material thickness 55. As mentioned before, the thickness 55 corresponds to the depth 41 of the recess 39 and/or the length 29 of the projection 15. Also this embodiment may benefit from the curved contact surface according to the invention in that a material film 49 will form at the bottom 45 of the recess 39.

In Figs. 5 and 6, two examples are shown, which show the limits of a preferred region of angles 27 for inclined flanks 23 of the holding projection 15. Thereby, the angle 27 shown in Fig. 5 represents a lower limit of the preferred range and is about 25°. The angle 27 shown in Fig. 6 is about 50° and represents the upper limit of the preferred range. To conclude, the angle 27 for inclined flanks 23 of the holding projection 15 is preferable within in the range between 25° and 50°. However, as mentioned above, also angles 27 which are out of this preferred range, can still be applied and the workpiece 3 may still benefit from the advantages of the invention. The radii of curvature 33 for the contact surface 17 are, in both embodiments, about 30% of the material thickness 55.

As can be seen above, the radii of curvature 33 for all embodiments described so far, lie within the preferred range of radii 33 between 10% and 100% of the material thickness 55. Said material thickness 55 corresponds to the depth 41 of the recess 39 and the length 29 of the holding projection 15. Furthermore, all embodiments so far have radii of curvature 33 that lie within the more preferred range of 30% to 70% of the material thickness 55.

In Fig. 7, another holding projection 15 is shown, wherein said holding projection 15 is also provided with a contact surface 17 having a radius of curvature 33 which is about 30% of the material thickness 55. However, in contrast to the aforementioned embodiments, the flanks 23 are not inclined with respect to the surface normal 25, but are parallel with each other. Such an embodiment may also be combined with the embodiments as shown before. In particular, parallel flanks 23 may be combined with a contact surface 17 that has a radius of curvature 33 that differs from 30% of the material thickness 55.

In another embodiment, which is not shown here, the holding projection 15 may be provided with a first section that projects from the base 13 and a second section that projects from the first section to the contact surface 17, wherein the flanks 23 of said sections have different angles relative to each other. Just by way of example, the first section could be provided with parallel flanks 23 as shown in Fig. 7 whereas the second section is provided with inclined flanks 23 as in any of the embodiments described with respect to Figs.1 to 6. Furthermore, the holding projection 15 could be provided with even more sections or with a flank having a continuous curve-like progression extending from the base 13 to the contact surface 17.

### Reference signs

- 1: Injection mold
- 3: Workpiece
- 5: Cavity
- 7: First material
- 9: Holding member
- 11: Insert
- 13: Base
- 15: Holding projection
- 17: Contact surface
- 19: Convex cross section
- 20: Direction of projection
- 21: Contact direction
- 23: Flank
- 25: Surface normal
- 27: Angle
- 29: Length
- 31: Width
- 33: Radius of curvature
- 35: Outer surface
- 37: Second material
- 39: Recess
- 41: Depth
- 43: Width
- 45: Bottom
- 47: Radius of curvature
- 49: Material film
- 51: Flank
- 53: Material thickness of the material film
- 55: Material thickness of the first material in the vicinity of the recess

## Claims

1. Method of producing a workpiece (3) by injection molding in an injection mold (1), wherein the injection mold (1) comprises a plurality of holding members (9) for securing an insert (11) during overmolding, the holding members (9) having a base (13) and a holding projection (15) projecting from said base (13), wherein the holding projection (15) is provided with at least one contact surface (17) for fixating the insert (11), wherein the at least one contact surface (17) has an overall convex cross section (19) in at least one intersecting plane, **characterized in that** the contact surface (17) of at least one holding member (9) does not abut the insert (11) and a continuous material film (49) is created between the holding projection (15) and the insert (11).

2. The method according to claim 1, **characterized in that** the holding projection (15) of the at least one holding member (9) has an overall pin-shape.

3. The method according to claim 1 or 2, **characterized in that** the at least one holding projection tapers (15) from the base (13) towards the at least one contact surface (17).

4. The method according to any of claims 1 to 3, **characterized in that** the at least one holding projection (15) has an overall wedge-shaped cross section.

5. The method according to any of claims 1 to 4, **characterized in that** the at least one holding projection (15) has at least one flank (23) that is inclined with respect to a surface normal (25) on the contact surface (17) at an angle (27) between 15° and 60°, preferably between 25° and 50°, wherein the surface normal (25) is parallel with a direction of projection (20) along which the holding projection (15) projects from the base (13).

6. The method according to any of claims 1 to 5, **characterized in that** the at least one holding member (15) is formed as a rib, wherein the top of the rib has the convex cross section (19).

7. The method according to any of claims 1 to 6, **characterized in that** the at least one holding projection (15) has, in a cross section, a length (29) and a width (31), wherein the width (31) at the half length (29) is between 70% and 130% of the length (29).

8. The method according to any of claims 1 to 7, **characterized in that** the at least one contact surface (15) has a radius of curvature (33) that is between 10% and 100%, preferably between 30% and 70%, of a length (29) of the holding projection (15).

9. Injection molded workpiece (3) made from a first material (7) having at least one insert (11) made from a second material (37), the workpiece (3) having a plurality of recesses (39) which extend from an outer surface (35) of the first material (7) towards the insert (11), wherein at least one recess (39) has an overall concave shape in the vicinity of the insert (11), **characterized in that** a material film (49) consisting of the first material (7) covers a bottom (45) of the recess (39), wherein the material film (49) is connected with two flanks (51) of the recess (39) forming a continuous material film (49) at the bottom (49) of the recess (39).

10. Injection molded workpiece (3) according to claim 9, **characterized in that** the at least one recess (39) tapers towards the insert (11).

11. Injection molded workpiece (3) according to any of claims 9 or 10, **characterized in that** a material thickness (53) of first material (7) decreases from the flanks (51) of the recess (39) towards a bottom (45) of the recess (39).

12. Injection molded workpiece (3) according to any of claims 9 to 11, **characterized in that** the at least one insert (11) is made from metal.

13. Injection molded workpiece (3) according to any of claims 9 to 12, **characterized in that** the at least one insert (11) is a magnet.

14. Injection molded workpiece (3) according to any of claims 9 to 13, **characterized in that** the workpiece (3) is produced by a method according to any of claims 1 to 8, wherein at least one insert (11) made from the second material (37) is inserted into the injection mold (1), and wherein said injection mold (1) is at least partially filled with the first material (7).

## Patentansprüche

1. Verfahren zur Herstellung eines Werkstücks (3) durch Spritzgießen in einer Spritzgussform (1), wobei die Spritzgussform (1) eine Vielzahl von Halteelementen (9) zum Sichern eines Einsatzes (11) während des Überformens umfasst, wobei die Halteelemente (9) eine Basis (13) und einen Haltevorsprung (15) aufweisen, der von der Basis (13) vorsteht, wobei der Haltevorsprung (15) mit mindestens einer Kontaktfläche (17) zum Fixieren des Einsatzes (11) versehen ist, wobei die mindestens eine Kontaktfläche (17) in mindestens einer Schnittebene einen insgesamt konvexen Querschnitt (19) aufweist, **dadurch gekennzeichnet, dass** die Kontaktfläche (17) mindestens eines Halteelements (9) nicht am Einsatz (11) anliegt und zwischen dem Haltevorsprung (15) und dem Einsatz (11) ein durchgehender Materialfilm (49) erzeugt wird.

2. Das Verfahren nach Anspruch 1, **dadurch gekennzeichnet, dass** der Haltevorsprung (15) des mindestens einen Halteelements (9) insgesamt stiftförmig ist.

3. Das Verfahren nach Anspruch 1 oder 2, **dadurch gekennzeichnet, dass** der mindestens eine Haltevorsprung (15) sich von der Basis (13) zu der mindestens einen Kontaktfläche (17) hin verjüngt.

4. Das Verfahren nach einem der Ansprüche 1 bis 3, **dadurch gekennzeichnet, dass** der mindestens eine Haltevorsprung (15) einen insgesamt keilförmigen Querschnitt aufweist.

5. Das Verfahren nach einem der Ansprüche 1 bis 4, **dadurch gekennzeichnet, dass** der mindestens eine Haltevorsprung (15) mindestens eine Flanke (23) aufweist, die in Bezug auf eine Flächennormale (25) auf der Kontaktfläche (17) in einem Winkel ( 27) zwischen 15° und 60°, vorzugsweise zwischen 25° und 50°, geneigt ist, wobei die Oberflächennormale (25) parallel zu einer Projektionsrichtung (20) ist, entlang derer der Haltevorsprung (15) von der Basis (13) vorsteht.

6. Das Verfahren nach einem der Ansprüche 1 bis 5, **dadurch gekennzeichnet, dass** das mindestens eine Halteelement (15) als Rippe ausgebildet ist, wobei die Oberseite der Rippe einen konvexen Querschnitt (19) aufweist.

7. Das Verfahren nach einem der Ansprüche 1 bis 6, **dadurch gekennzeichnet, dass** der mindestens eine Haltevorsprung (15) in einem Querschnitt eine Länge (29) und eine Breite (31) aufweist, wobei die Breite (31) bei der halben Länge (29) zwischen 70 % und 130 % der Länge (29) beträgt.

8. Das Verfahren nach einem der Ansprüche 1 bis 7, **dadurch gekennzeichnet, dass** die mindestens eine Kontaktfläche (15) einen Krümmungsradius (33) aufweist, der zwischen 10 % und 100 %, vorzugsweise zwischen 30 % und 70 %, einer Länge (29) des Haltevorsprungs (15) beträgt.

9. Spritzgegossenes Werkstück (3) aus einem ersten Material (7) mit mindestens einem Einsatz (11) aus einem zweiten Material (37), wobei das Werkstück (3) mehrere Vertiefungen (39) aufweist, die sich von einer Außenfläche (35) des ersten Materials (7) zum Einsatz (11) hin erstrecken, wobei mindestens eine Vertiefung (39) in der Nähe des Einsatzes (11) eine insgesamt konkave Form aufweist, **dadurch gekennzeichnet, dass** ein aus dem ersten Material (7) bestehender Materialfilm (49) einen Boden (45) der Vertiefung (39) bedeckt, wobei der Materialfilm (49) mit zwei Flanken (51) der Vertiefung (39) verbunden ist und am Boden (49) der Vertiefung (39) einen durchgehenden Materialfilm (49) bildet.

10. Spritzgegossenes Werkstück (3) nach Anspruch 9, **dadurch gekennzeichnet, dass** sich die mindestens eine Vertiefung (39) zum Einsatz (11) hin verjüngt.

11. Spritzgegossenes Werkstück (3) nach einem der Ansprüche 9 oder 10, **dadurch gekennzeichnet, dass** eine Materialstärke (53) eines ersten Materials (7) von den Flanken (51) der Vertiefung (39) zu einem Boden (45) der Vertiefung (39) hin abnimmt.

12. Spritzgegossenes Werkstück (3) nach einem der Ansprüche 9 bis 11, **dadurch gekennzeichnet, dass** der mindestens eine Einsatz (11) aus Metall besteht.

13. Spritzgegossenes Werkstück (3) nach einem der Ansprüche 9 bis 12, **dadurch gekennzeichnet, dass** der mindestens eine Einsatz (11) ein Magnet ist.

14. Spritzgegossenes Werkstück (3) nach einem der Ansprüche 9 bis 13, **dadurch gekennzeichnet, dass** das Werkstück (3) durch ein Verfahren nach einem der Ansprüche 1 bis 8 hergestellt wird, wobei mindestens ein Einsatz (11) aus dem zweiten Material (37) in die Spritzgussform (1) eingesetzt wird und wobei die Spritzgussform (1) mindestens teilweise mit dem ersten Material (7) gefüllt wird.

## Revendications

1. Procédé de fabrication d'une pièce (3) via moulage par injection dans un moule d'injection (1), dans lequel le moule d'injection (1) comprend une pluralité d'éléments de maintien (9) pour fixer un insert (11) durant le surmoulage, les éléments de maintien (9) ayant une base (13) et une projection de maintien (15) qui se projette à partir de ladite base (13), dans lequel la projection de maintien (15) est pourvue d'au moins une surface de contact (17) pour fixer l'insert (11), dans lequel ladite au moins une surface de contact (17) présente une section transversale généralement convexe (19) dans au moins un plan d'intersection, **caractérisé en ce que** la surface de contact (17) d'au moins un élément de maintien (9) ne vient pas en butée contre l'insert (11) et un film de matériau continu (49) est créé entre la projection de maintien (15) et l'insert (11).

2. Procédé selon la revendication 1, **caractérisé en ce que** la projection de maintien (15) dudit au moins un élément de maintien (9) présente une forme générale de broche.

3. Procédé selon la revendication 1 ou 2, **caractérisé en ce que** ladite au moins une projection de maintien se rétrécit (15) depuis la base (13) vers ladite au moins une surface de contact (17).

4. Procédé selon l'une quelconque des revendications 1 à 3, **caractérisé en ce que** ladite au moins une projection de maintien (15) présente une section transversale généralement en forme de coin.

5. Procédé selon l'une quelconque des revendications 1 à 4, **caractérisé en ce que** ladite au moins une projection de maintien (15) présente au moins un flanc (23) qui est incliné par rapport à une normale à la surface (25) sur la surface de contact (17) selon un angle (27) compris entre 15° et 60°, de préférence entre 25° et 50°, dans lequel la normale à la surface (25) est parallèle à une direction de projection (20) le long de laquelle la projection de maintien (15) se projette à partir de la base (13).

6. Procédé selon l'une quelconque des revendications 1 à 5, **caractérisé en ce que** ledit au moins un élément de maintien (15) est conformé comme une nervure, dans lequel la partie supérieure de la nervure présente une section transversale convexe (19).

7. Procédé selon l'une quelconque des revendications 1 à 6, **caractérisé en ce que** ladite au moins une projection de maintien (15) présente, en section transversale, une longueur (29) et une largeur (31), dans lequel la largeur (31) à mi-longueur (29) est comprise entre 70 % et 130 % de la longueur (29).

8. Procédé selon l'une quelconque des revendications 1 à 7, **caractérisé en ce que** ladite au moins une surface de contact (15) présente un rayon de courbure (33) qui est compris entre 10 % et 100 %, de préférence entre 30 % et 70 %, d'une longueur (29) de la projection de maintien (15).

9. Pièce moulée par injection (3) constituée d'un premier matériau (7) comportant au moins un insert (11) constitué d'un deuxième matériau (37), la pièce (3) comportant une pluralité de renfoncements (39) qui s'étendent depuis une surface externe (35) du premier matériau (7) vers l'insert (11), dans lequel au moins un renfoncement (39) présente une forme généralement concave à proximité de l'insert (11), **caractérisée en ce qu'**un film de matériau (49) constitué du premier matériau (7) recouvre un fond (45) du renfoncement (39), dans lequel le film de matériau (49) est connecté à deux flancs (51) du renfoncement (39) en formant un film de matériau continu (49) au fond (49) du renfoncement (39).

10. Pièce moulée par injection (3) selon la revendication 9, **caractérisée en ce que** ledit au moins un renfoncement (39) se rétrécit vers l'insert (11).

11. Pièce moulée par injection (3) selon l'une quelconque des revendications 9 et 10, **caractérisée en ce qu'**une épaisseur de matériau (53) du premier matériau (7) diminue depuis les flancs (51) du renfoncement (39) vers un fond (45) du renfoncement (39).

12. Pièce moulée par injection (3) selon l'une quelconque des revendications 9 à 11, **caractérisée en ce que** ledit au moins un insert (11) est en métal.

13. Pièce moulée par injection (3) selon l'une quelconque des revendications 9 à 12, **caractérisée en ce que** ledit au moins un insert (11) est un aimant.

14. Pièce moulée par injection (3) selon l'une quelconque des revendications 9 à 13, **caractérisée en ce que** la pièce (3) est produite par un procédé selon l'une quelconque des revendications 1 à 8, dans lequel au moins un insert (11) constitué à partir du deuxième matériau (37) est inséré dans le moule d'injection (1), et dans lequel ledit moule d'injection (1) est au moins partiellement rempli avec le premier matériau (7).
